# EUROPEAN PATENT APPLICATION

(11) **EP 4 807 652 A1**
(43) Date of publication of application: **16.09.2026**
(21) Application number: 25397502.3
(22) Date of filing: 10.03.2025
(51) Int. Cl.: G06Q 20/32, G06Q 20/34, G06Q 20/36

(54) **METHOD AND SYSTEM FOR RESTRICTING A USE OF A TOKEN**

(71) Applicant: Netcetera AG, 8004 Zurich (CH)
(72) Inventor: Lilja, Viliina, 00180 Helsinki (FI); Mononen, Tero, 00180 Helsinki (FI)
(74) Representative: LKGLOBAL Partnerschaftsgesellschaft mbB

(57) **Abstract**

The invention relates to a method for restricting a use of a token (10). The method comprises connecting a card (10b) with an application stored on a main user device (20, S10) and providing a main token (10a) associated with sensitive card information of the card (10b), wherein the main token (10a) is configured to enable a main user (10) to use a plurality of card functionalities (S20). The method further comprises providing a first additional token (11a) that is associated with the main token (10a) by a first token reference, wherein the first additional token (11a) is configured to restrict the use of the plurality of card functionalities enabled by the main token (10a) to a first subset of the plurality of card functionalities (S30). The invention also relates to a system (100) for restricting a use of a token.

## Description

The present invention generally relates to the selective restriction of token-based card events. In particular, the invention relates to a method for restricting a use of a token as well as to a system for restricting a use of a token.

User devices like mobile phones are commonly used to add or connect a card, e.g., a payment card, to a specified wallet app stored on the user device. This allows the user of the user device to perform payment transactions without physical presentation of the card itself. Usually, a so-called tokenization process will be involved when the user adds or connects the card to the wallet app. In particular, sensitive data associated with the card will be replaced with a token that is saved on the user device or at the merchant's site where the card is registered via the wallet app. In other words, the tokenization process maps the sensitive data to a specific token which can only be used by the parties that are involved in the tokenization process and cannot be used by any third parties, which may avoid access to sensitive user data by third parties. The token generally enables the user of the user device to carry out a plurality of card functionalities, e.g., to carry out different card events like payment transactions or the like. However, enabling all of these card functionalities in connection with the token may involve the risk that all of these card functionalities may be used in the context of fraudulent actions.

It may be seen as an object of the invention to improve the security for token-based card events.

A method and a system according to the features of the independent claims are provided. Further embodiments of the invention are evident from the dependent claims, the Figures and the following description.

According to an aspect of the invention, a method for restricting a use of a token is provided. As step of the method comprises connecting a card with an application stored on a main user device. Another step of the method comprises providing a main token associated with sensitive card information of the card, wherein the main token is configured to enable a main user to use a plurality of card functionalities. Another step of the method comprises providing a first additional token that is associated with the main token by a first token reference, wherein the first additional token is configured to restrict the use of the plurality of card functionalities enabled by the main token to a first subset of the plurality of card functionalities. The method steps may be performed on the indicated order.

The inventive method may allow a main user to selectively restrict token-based card events, in particular, to selectively restrict token-based card events executed in connection with the main token. That is, the main user can request a token service provider, e.g. a server entity of the token service provider, to provide at least one additional token that can be used by the main user, wherein the additional token enables the main user to use the card functionalities provided by the main token, but only in a restricted manner. In other words, with the additional token, the main user can restrict the usage of certain card functionalities provided by the main token such that, when the main user wishes to carry out a card event, e.g., a payment transaction or the like, this card event may be inhibited or limited by the restriction implemented in the additional token. The restriction can be implemented in several ways. For example, the restriction may be implemented by restricting a number of card events, restricting specified card event types, restricting a payment amount in the context of a card-based payment transaction and/or restricting a time period during which one or more card events can be carried out by the main user.

Furthermore, the inventive method may allow a main user to selectively authorize one or more additional users to carry out token-based card events executed in connection with additional tokens that are based on the main token, wherein the additional tokens enable the one or more additional users to use the card functionalities provided by the main token, but only in a restricted manner. In other words, with the additional tokens, the main user can restrict the usage of certain card functionalities provided by the main token for other users such that the other users can only use selected ones of the card functionalities provided by the main token. Also in this example, the restriction may be implemented by restricting a number of card events, restricting specified card event types, restricting a payment amount in the context of a card-based payment transaction and/or restricting a time period during which one or more card events can be carried out by the other users.

The restriction of card-based functionalities using restricted tokens (so-called capped tokens) may allow the main user to limit a possible loss of funds in case of a fraudulent action. In particular, the additional tokens which are based on the main token may restrict the usage of the card functionalities actually provided by the main token in such a way that a card event carried out in connection with a fraudulent action does not result in a loss of all funds of the card. Furthermore, with the additional tokens, the main user may distribute authorizations for limited use of card functionalities provided by the main token. This may be achieved by generating the additional tokens, each of which is referenced to the main token and each of which allows a respective user to use only a portion of the card functionalities provided by the main token. This allows the main user to authorize other users to carry out card events based on the additionally generated tokens which are referenced to the main token, and to keep full control over the specific card events which the other users are enabled to carry out.

The main user may connect the card, e.g., a payment card like a debit or credit card, with an application, e.g., a wallet application, stored on the main user device. The main user device may be a mobile phone, a smartwatch, a head-mounted device or another portable mobile device on which the application can be stored.

The card which is to be connected with, e.g., added to, the application of the main user device may be a physical card which may be connected to the application by holding a chip of the card close to the main user device on which the application is stored and/or by performing the required steps for registering the card with the application. The card may also be a virtual card which may be connected with, e.g., added to, the application by performing the required registering steps, for example by inputting card details into the main user device.

The main token and/or the additional tokens referred to herein may be cryptographic tokens which represent or replace sensitive card information of the card which has been connected to the application stored on the main user device. In particular, the main user device may be used to add or connect a card, e.g., a payment card, to a specified wallet app stored on the main user device. This allows the main user to use the main user device in order to perform payment transactions without physical presentation of the card itself. A tokenization process may be initially performed when the main user adds or connects the card to the wallet app, wherein sensitive card data associated with the card will be replaced with the main token that is saved on the main user device or at a merchant's site where the card is registered via the wallet app. In other words, the tokenization process maps the sensitive card data to a specific token which may only be used by the parties that are involved in the tokenization process and cannot be used by any third parties, which may avoid access to sensitive user data by third parties.

The main token is configured to enable the main user to use a plurality of card functionalities, e.g., functionalities that are activated when a card event like a payment transaction takes place. The plurality of card functionalities enabled by the main token may include a complete set of card functionalities that the main token issued by the token service provider allows to be carried out by the main user.

Once the card is connected with the application, the main user may request a first additional token which is based on the main token. The request may be sent from the main user device to a server entity, e.g., to a server entity of a token service provider, where the first additional token is generated. However, it is also possible that the first additional token is generated at the main user device itself. In particular, the first additional token may represent a kind of sub-token that depends on the main token. The dependence between the first additional token and the main token is defined by a first token reference, for example a parametric reference. If the main token is deactivated or suspended, this may result in the first additional token to be deactivated or suspended as well. If certain card functionalities of the main token are restricted, this may also apply to the first additional token. In an example, the first additional token enables card functionalities that correspond to card functionalities enabled by the main token, wherein the first additional token preferably enables only a portion or subset of the card functionalities enabled by the main token. The first additional token that is associated with the main token by the first token reference is configured to restrict the use of the plurality of card functionalities enabled by the main token to a first subset of the plurality of card functionalities.

According to an embodiment, providing the first additional token comprises providing the first additional token to the main user and/or to a first additional user, thereby enabling the main user and/or the first additional user to use only the first subset of the plurality of card functionalities.

For example, the first additional token may be provided to the main user device of the main user such that the main user may use the restricted set of card functionalities provided by the first additional token on the main user device. Accordingly, the first additional token may be provided to a first additional user device of the first additional user such that the first additional user may use the restricted set of card functionalities provided by the first additional token on the first additional user device.

The restricted set of card functionalities provided by the first additional token may be used in connection with a card event which is performed using the main user device and/or the first additional user device at a terminal entity, e.g., at a merchant's site, etc., or at a service provider entity, wherein a connection is established between the main user device and/or the first additional user device on the one hand and the terminal entity or the service provider entity on the other hand. The first additional token may then allow the main user and/or the first additional user to use the subset of the card functionalities during the card event.

According to an embodiment, the first subset of the plurality of card functionalities provides less card functionalities than the plurality of card functionalities enabled by the main token.

This means that not all card functionalities enabled by the main token are also enabled by the first additional token. In particular, the subset of the card functionalities enabled by the first additional token may include less card functionalities than the complete set of card functionalities enabled by the main token.

According to an embodiment, the method comprises providing a second additional token that is associated with the main token by a second token reference, wherein the second additional token is configured to restrict the use of the plurality of card functionalities to a second subset of the plurality of card functionalities, wherein providing the second additional token comprises providing the second additional token to the main user and/or a second additional user, thereby enabling the main user and/or the second additional user to use only the second subset of the plurality of card functionalities.

The features and characteristics described with respect to the first additional token may analogously apply to the features and characteristics described with respect to the second additional token. Thus, the inventive method may allow a main user to distribute at least two different additional tokens which are referenced to the main token among different users. For example, the first additional token is provided to the first additional user and the second additional token is provided to the second additional user. In an example, the first additional token restricts the card functionalities enabled by the main token in such a way that the first additional user can only carry out one specified card event, e.g., may only make one payment transaction, with the first additional token using their card, whereas the second additional token restricts the card functionalities enabled by the main token in such a way that the second additional user can only carry out card events for one week with the second additional token using their card. In the same way, a third additional token (which may have been generated in the same way as the first and second additional tokens) may restrict the card functionalities enabled by the main token in such a way that a third additional user can only carry out card events including payment transactions with the third additional token for a specified maximum payment amount, e.g., 10 Euros, using their card.

According to an embodiment, the method comprises providing a plurality of additional tokens that are associated with the main token by respective token references, wherein each of the plurality of additional tokens is configured to restrict the use of the plurality of card functionalities to a respective subset of the plurality of card functionalities, wherein providing the plurality of additional tokens comprises providing each of the plurality of additional tokens to the main user and/or a respective additional user, thereby enabling the main user and/or the respective additional user to use only the respective subset of the plurality of card functionalities.

This means that an arbitrary number of additional tokens may be generated as described above. The features and characteristics described with respect to the first additional token may analogously apply to the features and characteristics described with respect to the plurality of additional tokens.

According to an embodiment, the main token is configured to enable a use of the plurality of card functionalities by enabling the main user to execute a number of card events, wherein the first additional token is configured to restrict the use of the plurality of card functionalities by restricting the number of card events to a reduced number of card events executable by the main user and/or a first additional user.

For example, while the main token enables the main user and/or the first additional user to carry out a complete set of card functionalities, the first additional token limits the enabled card functionalities to only a reduced set of card functionalities, wherein the reduced set of card functionalities that is enabled by the first additional token includes a smaller number of card events that can be carried out in connection with the first additional token.

According to an embodiment, the main token is configured to enable a use of the plurality of card functionalities by enabling the main user to execute a complete set of card event types, wherein the first additional token is configured to restrict the use of the plurality of card functionalities by restricting the complete set of card event types to a subset of card event types executable by the main user and/or a first additional user.

For example, while the main token enables the main user and/or the first additional user to carry out a complete set of card event types, the first additional token limits the card event types to only a reduced set of card event types. The reduced set of card event types that is enabled by the first additional token may include only a selection of specific types of card events, like for example payment transactions for public transport services, while other types of card events, like for example payment transactions for online streaming services, are limited or inhibited.

According to an embodiment, the main token is configured to enable a use of the plurality of card functionalities by enabling the main user to execute one or more card events over a predetermined time period, wherein the first additional token is configured to restrict the use of the plurality of card functionalities by restricting the predetermined time period to a reduced time period during which the one or more card events are executable by the main user and/or a first additional user.

For example, the main token is configured to enable the use of the plurality of card functionalities by enabling the main user to execute one or more card events until the main token is deactivated or suspended. In contrast, the first additional token may restrict the use of the plurality of card functionalities by limiting or reducing this predetermined time period to a reduced time period that is shorter than the predetermined time period. This may allow the first additional user to carry out the one or more card events only during the reduced time period, whereas outside of this time period, the first additional user may be prevented by the implementation of the first additional token to carry out the one or more card events.

In an example, the first additional token may enable the main user and/or the first additional user to carry out card events only during specified day times or only during specified night times. In another example, the first additional token may enable the main user and/or the first additional user to carry out card events only during one or more specified days, weeks, months or years.

According to an embodiment, the main token is configured to enable a use of the plurality of card functionalities by enabling the main user to execute a payment transaction in connection with a specified payment amount, wherein the first additional token is configured to restrict the use of the plurality of card functionalities by restricting the specified payment amount to a reduced payment amount with which the payment transaction is executable by the main user and/or a first additional user.

For example, the main token is configured to enable the use of the plurality of card functionalities by enabling the main user to execute a payment transaction with an unlimited payment amount, e.g., an unlimited amount of money, or up to a payment amount that is currently available by the card connected to the application on the main user device.

In contrast, the first additional token may restrict the use of the plurality of card functionalities by limiting or reducing the specified payment amount to a reduced payment amount. This may allow the main user and/or the first additional user to carry out one or more card events only as long as the reduced payment amount is not exceeded during the payment transaction(s).

In an example, the main token may be configured to enable the use of the plurality of card functionalities by enabling the main user to execute a payment transaction within a specified domain, for example within one or more facilities, cities, regions or countries, wherein the first additional token is configured to restrict the use of the plurality of card functionalities by restricting the specified domain to a reduced domain that includes only a portion of the specified domain enabled by the main token. In particular, the first additional token may allow the card functionalities for the reduced domain, i.e., for only some of the facilities, cities, regions or countries of the complete specified domain for which the card functionalities are allowed by the main token.

According to an aspect, a system for restricting a use of a token is provided. The system comprises a main user device and a server entity. The main user device is configured to connect a card with an application stored on the main user device. The server entity is configured to provide a main token associated with sensitive card information of the card, wherein the main token is configured to enable a main user to use a plurality of card functionalities. The server entity is further configured to provide a first additional token that is associated with the main token by a first token reference, wherein the first additional token is configured to restrict the use of the plurality of card functionalities enabled by the main token to a first subset of the plurality of card functionalities.

The components, features and characteristics described with respect to the inventive method for restricting a use of a token also apply to the components, features and functionalities of the inventive system.

Exemplary embodiments of the invention are explained in more detail below with reference to schematic drawings.
- Fig. 1: shows a schematic representation of a system for restricting a use of a token.
- Fig. 2: shows a flow diagram of a method for restricting a use of a token.

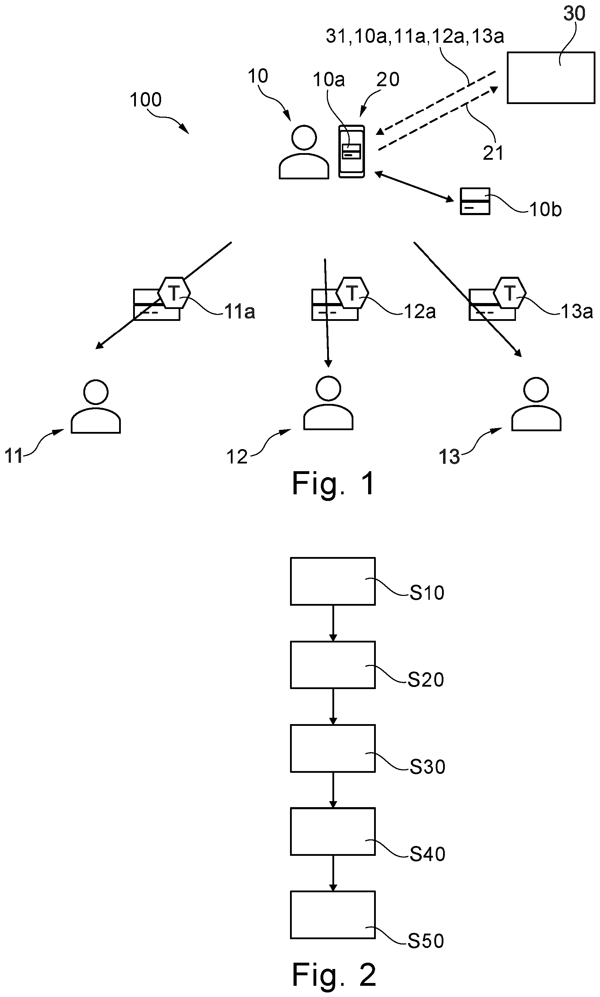

Fig. 1 shows a schematic representation of a system 100 for restricting a use of a token. The system 100 comprises a main user device 20, for example a mobile phone, of a main user 10 and a server entity 30, for example a token service provider entity. The main user device 20 and the server entity 30 may establish a communication between each other.

The main user device 20 may connect a card 10b with an application, for example a wallet application, stored on the main user device 20. The card 10b which is to be connected with, e.g., added to, the application of the main user device 20 may be a physical card which may be connected to the application by holding a chip of the card 10b close to the main user device 20 on which the application is stored and/or by performing the required steps for registering the card 10b with the application. The card 10b may also be a virtual card which may be connected with, e.g., added to, the application by performing the required registering steps, for example by inputting card details into the main user device 20.

The server entity 30 may provide a main token 10a associated with sensitive card information of the card 10b to the main user device 20, wherein the main token 10a enables the main user 10 to use a plurality of card functionalities, i.e., card functionalities which are provided by the card 10b in connection with the main token 10a. Before the main token 10a is provided to the main user device 20, a corresponding request 21 may be transmitted from the main user device 20 to the server entity 30. At the server entity 30, the generation of the main token 10a may be initiated and, thereafter, the main token 10a may be transmitted via a response 31 to the main user device 30.

The main token 10a enables the main user 10 to use a plurality of card functionalities, e.g., functionalities that are activated when a card event like a payment transaction using the main user device 20 takes place. The plurality of card functionalities enabled by the main token 10a may include a complete set of card functionalities that the main token 10a issued by the server entity 30 allows to be carried out by the main user 10 using the main user device 20.

Once the card 10b is connected with the application and the main token 10a is activated for the card 10b, the main user 10 may request a first additional token 11a which is based on the main token 10a. A corresponding request 21 may be sent from the main user device 20 to the server entity 30 where the first additional token 11a is generated. In particular, the first additional token 11a may be generated as a kind of sub-token that depends on the main token 10a, wherein the dependence between the first additional token 11a and the main token 10a is defined by a first token reference. After generation, the first additional token 11a may be sent via the response 31 to main user device 20.

The first additional token 11a enables card functionalities that correspond to card functionalities enabled by the main token 10a, wherein the first additional token 11a preferably enables only a portion or subset of the card functionalities which are enabled by the main token 10a. This means that the first additional token 11a that is associated with the main token 10a by the first token reference is configured to restrict the use of the plurality of card functionalities enabled by the main token 10a to a first subset of the plurality of card functionalities.

In the same way as described for the first additional token 11a, the main user 10 may request a second additional token 12a and/or a third additional token 13a and/or any further additional tokens which are also based on the main token 10a. The second additional token 12a, the third additional token 13a and/or any further additional tokens are generated at the server entity 30. These additional tokens 12a, 13a may be generated as a kind of respective sub-tokens that depend on the main token 10a, wherein the dependencies between these additional tokens 12a, 13a and the main token 10a are defined by a second token reference and a third token reference, respectively, and so on. After generation, the second and third additional tokens 12a, 13a may be sent via the response 31 to main user device 20. For example, the dependencies between these additional tokens 12a, 13a and the main token 10a may be defined by respective parametric references.

The main user 10 may selectively authorize one or more additional users 11, 12, 13 to carry out token-based card events executed in connection with the above mentioned first, second and third additional tokens 11a, 12a, 13a that are based on the main token 10a, wherein the additional tokens 11a, 12a, 13a enable the one or more additional users 11, 12, 13 to use the card functionalities provided by the main token 10a, but only in a restricted manner. In other words, with the additional tokens 11a, 12a, 13a, the main user 10 can restrict the usage of certain card functionalities provided by the main token 10a for other users 11, 12, 13 such that the other users 11, 12, 13 can only use selected ones of the card functionalities provided by the main token 10a. Such a restriction may be implemented by restricting a number of card events, restricting specified card event types, restricting a payment amount in the context of a card-based payment transaction and/or restricting a time period during which one or more card events can be carried out by the other users 11, 12, 13.

In an example, the main token 10a enables the use of the plurality of card functionalities by enabling the main user 10 to execute a number of card events, wherein the first additional token 11a restricts the use of the plurality of card functionalities by restricting the number of card events to a reduced number of card events executable by the main user 10 and/or by the first additional user 11. The same restriction may be applied for the second additional user 12 in the context of the second additional token 12a and/or for the third additional user 13 in the context of the third additional token 13a.

In an example, the main token 10a is configured to enable the use of the plurality of card functionalities by enabling the main user 10 to execute a complete set of card event types, wherein the first additional token 11a is configured to restrict the use of the plurality of card functionalities by restricting the complete set of card event types to a subset of card event types executable by the main user 10 and/or by the first additional user 11. The same restriction may be applied for the second additional user 12 in the context of the second additional token 12a and/or for the third additional user 13 in the context of the third additional token 13a.

In an example, the main token 10 is configured to enable the use of the plurality of card functionalities by enabling the main user 10 to execute one or more card events over a predetermined time period, wherein the first additional token 11a is configured to restrict the use of the plurality of card functionalities by restricting the predetermined time period to a reduced time period during which the one or more card events are executable by the main user 10 and/or by the first additional user 11. The same restriction may be applied for the second additional user 12 in the context of the second additional token 12a and/or for the third additional user 13 in the context of the third additional token 13a.

In an example, the main token 10a is configured to enable the use of the plurality of card functionalities by enabling the main user 10 to execute a payment transaction in connection with a specified payment amount, wherein the first additional token 11a is configured to restrict the use of the plurality of card functionalities by restricting the specified payment amount to a reduced payment amount with which the payment transaction is executable by the main user 10 and/or a first additional user 11. The same restriction may be applied for the second additional user 12 in the context of the second additional token 12a and/or for the third additional user 13 in the context of the third additional token 13a.

Fig. 2 shows a flow diagram of a method for restricting a use of a token. The method may be carried out using the system 100 as described with respect to Fig. 1 above. A step S10 of the method comprises connecting a card 10b with an application stored on a main user device 20. Another step S20 comprises providing a main token 10a associated with sensitive card information of the card 10b, wherein the main token 10a is configured to enable a main user 10 to use a plurality of card functionalities. Another step S30 comprises providing a first additional token 11a that is associated with the main token 10a by a first token reference, wherein the first additional token 11a is configured to restrict the use of the plurality of card functionalities enabled by the main token 10a to a first subset of the plurality of card functionalities.

Another step S40 of the method may comprise providing a second additional token 12a that is associated with the main token 10a by a second token reference, wherein the second additional token 12a is configured to restrict the use of the plurality of card functionalities to a second subset of the plurality of card functionalities, wherein providing the second additional token 12a comprises providing the second additional token 12a to the main user 10 and/or a second additional user 12, thereby enabling the main user 10 and/or the second additional user 12 to use only the second subset of the plurality of card functionalities.

Another step S50 of the method may comprise providing a plurality of additional tokens 11a, 12a, 13a that are associated with the main token 10a by respective token references, wherein each of the plurality of additional tokens 11a, 12a, 13a is configured to restrict the use of the plurality of card functionalities to a respective subset of the plurality of card functionalities, wherein providing the plurality of additional tokens 11a, 12a, 13a comprises providing each of the plurality of additional tokens 11a, 12a, 13a to the main user 10 and/or a respective additional user 11, 12, 13, thereby enabling the main user 10 and/or the respective additional user 11, 12, 13 to use only the respective subset of the plurality of card functionalities.

The above-described method enables a card owner to allow token usage in a way that it could be limited. In other words, a main token may be limited (capped) to one or more transactions, certain times (one day etc.), a certain amount per day/week, etc. The resulting additional tokens which are based on the main token may be authorized for different users or the main user can restrict the additional token usage for herself/himself.

## Claims

1. A method for restricting a use of a token (10), comprising:
connecting a card (10b) with an application stored on a main user device (20, S10);
providing a main token (10a) associated with sensitive card information of the card (10b), wherein the main token (10a) is configured to enable a main user (10) to use a plurality of card functionalities (S20);
providing a first additional token (11a) that is associated with the main token (10a) by a first token reference, wherein the first additional token (11a) is configured to restrict the use of the plurality of card functionalities enabled by the main token (10a) to a first subset of the plurality of card functionalities (S30).

2. The method according to claim 1,
wherein providing the first additional token (11a) comprises providing the first additional token (11a) to the main user (10) and/or a first additional user (11), thereby enabling the main user (10) and/or the first additional user (11a) to use only the first subset of the plurality of card functionalities.

3. The method according to any one of the preceding claims,
wherein the first subset of the plurality of card functionalities provides less card functionalities than the plurality of card functionalities enabled by the main token (10a).

4. The method according to any one of the preceding claims, comprising:
providing a second additional token (12a) that is associated with the main token (10a) by a second token reference, wherein the second additional token (12a) is configured to restrict the use of the plurality of card functionalities to a second subset of the plurality of card functionalities (S40);
wherein providing the second additional token (12a) comprises providing the second additional token (12a) to the main user (10) and/or a second additional user (12), thereby enabling the main user (10) and/or the second additional user (12) to use only the second subset of the plurality of card functionalities.

5. The method according to any one of the preceding claims,
providing a plurality of additional tokens (11a, 12a, 13a) that are associated with the main token (10a) by respective token references, wherein each of the plurality of additional tokens (11a, 12a, 13a) is configured to restrict the use of the plurality of card functionalities to a respective subset of the plurality of card functionalities (S50);
wherein providing the plurality of additional tokens (11a, 12a, 13a) comprises providing each of the plurality of additional tokens (11a, 12a, 13a) to the main user (10) and/or a respective additional user (11, 12, 13), thereby enabling the main user (10) and/or the respective additional user (11, 12, 13) to use only the respective subset of the plurality of card functionalities.

6. The method according to any one of the preceding claims,
wherein the main token (10a) is configured to enable a use of the plurality of card functionalities by enabling the main user (10) to execute a number of card events;
wherein the first additional token (11a) is configured to restrict the use of the plurality of card functionalities by restricting the number of card events to a reduced number of card events executable by the main user (10) and/or a first additional user (11).

7. The method according to any one of the preceding claims,
wherein the main token (10a) is configured to enable a use of the plurality of card functionalities by enabling the main user (10) to execute a complete set of card event types;
wherein the first additional token (11a) is configured to restrict the use of the plurality of card functionalities by restricting the complete set of card event types to a subset of card event types executable by the main user (10) and/or a first additional user (11).

8. The method according to any one of the preceding claims,
wherein the main token (10) is configured to enable a use of the plurality of card functionalities by enabling the main user (10) to execute one or more card events over a predetermined time period;
wherein the first additional token (11) is configured to restrict the use of the plurality of card functionalities by restricting the predetermined time period to a reduced time period during which the one or more card events are executable by the main user (10) and/or a first additional user (11).

9. The method according to any one of the preceding claims,
wherein the main token (10a) is configured to enable a use of the plurality of card functionalities by enabling the main user (10) to execute a payment transaction in connection with a specified payment amount;
wherein the first additional token (11a) is configured to restrict the use of the plurality of card functionalities by restricting the specified payment amount to a reduced payment amount with which the payment transaction is executable by the main user (10) and/or a first additional user (11).

10. A system (100) for restricting a use of a token, comprising:
a main user device (20);
a server entity (30);
wherein the main user device (20) is configured to connect a card (10b) with an application stored on the main user device (20);
wherein the server entity (30) is configured to provide a main token (10a) associated with sensitive card information of the card (10b), wherein the main token (10a) is configured to enable a main user (10) to use a plurality of card functionalities;
wherein the server entity (30) is configured to provide a first additional token (11a) that is associated with the main token (10a) by a first token reference, wherein the first additional token (11a) is configured to restrict the use of the plurality of card functionalities enabled by the main token (10a) to a first subset of the plurality of card functionalities.
